# EUROPEAN PATENT APPLICATION

(11) **EP 3 669 968 A1**
(43) Date of publication of application: **24.06.2020**
(21) Application number: 18215410.4
(22) Date of filing: 21.12.2018
(51) Int. Cl.: B01D 53/04, D06F 43/00

(54) **EXTRACTION AND/OR PURIFICATION SYSTEM, IN PARTICULAR AUTONOMOUS EXTRACTION AND/OR PURIFICATION SYSTEM**

(71) Applicant: Airbus Defence and Space GmbH, 82024 Taufkirchen (DE)
(72) Inventor: JANECEK, Vladislav, 88213 Regensburg (DE)
(74) Representative: Daub, Thomas

(57) **Abstract**

The invention proposes an extraction and/or purification system, in particular an autonomous extraction and/or purification system, with at least one carbon dioxide separation device (12) that is configured to provide separated carbon dioxide (CO₂) from the ambient air (14), and with at least one work chamber (16), which is configured to perform an extraction and/or purification process with carbon dioxide (CO₂) as a solvent, wherein the work chamber (16) is coupled with the carbon dioxide separation device (12)

## Description

### Description of related art

The invention relates to an extraction and/or purification system, and more specifically to a extraction and/or purification system using carbon dioxide (CO₂), preferably carbon dioxide in supercritical state, as a solvent.

There are already a variety of extraction or cleaning systems known. An example for a purification system is, for example, a washing machine. Washing machines are essential household appliances. Currently there are about 840 million domestic washing machines in use worldwide. The total annual consumption is about 92 TWh and 19 billion cubic meters of water.

A carbon dioxide cleaning process is proposed as an alternative to a household washing machine, see for example US 5,467,492 A. Such technology uses no water and no or a small amount of chemicals and still results in very gentle and sterilized-quality cleaning. In addition, such a cleaning process consumes less energy than conventional washing technology. In such systems carbon dioxide is used in an approximately closed-loop, wherein during inserting and extracting garments or cleaned objects a small quantity of carbon dioxide leaves the system. The system needs to be refilled with carbon dioxide after several cleaning cycles. For the purpose for refilling, the carbon dioxide can be stored in pressurized bottles. This approach however represents non-negligible safety hazards (e.g. risk of manipulation with CO₂ bottles, potential exposure to cold surfaces, leakage, etc) and necessitates additional logistics solutions to make carbon dioxide available for this particular purpose.

The objective of the invention is in particular to provide an extraction and/or purification system with improved properties in terms of supplying the carbon dioxide. The objective is achieved by the features of claim 1, while advantageous embodiments and further developments of the invention may be taken from the dependent claims.

### Advantages of the invention

The invention proposes an extraction and/or purification system, in particular an autonomous extraction and/or purification system, with at least one carbon dioxide separation device that is configured to provide separated carbon dioxide from the ambient air, and with at least one work chamber, which is configured to perform an extraction and/or purification process with carbon dioxide as a solvent, wherein the work chamber is coupled with the carbon dioxide separation device.

Preferentially the work chamber of the extraction and/or purification system is coupled with the carbon dioxide separation device directly. Preferably the work chamber of the extraction and/or purification system is coupled with the carbon dioxide separation device directly via lines and/or processing means. In particular, in operation a direct, automatic transfer of carbon dioxide is effected from the carbon dioxide separation device to the work chamber. A transfer is herein in particular effected in such a way that it is free from a separate transport of the carbon dioxide. Preferentially the work chamber is coupled with the carbon dioxide separation device independently from an operation state of the system.

By an "extraction and/or purification system" is in particular, in this context, a system to be understood that comprises at least one processing unit, which is in at least one operation state configured to perform an extraction and/or purification process. The extraction and/or purification system is preferably configured for an autonomous performance of an extraction and/or purification process. Preferentially the extraction and/or purification system is implemented by an at least partially autonomous extraction and/or purification system. An "at least partially autonomous extraction and/or purification system" is herein in particular to mean an extraction and/or purification system that is at least configured for an autonomous production and/or generating of at least one substance, namely carbon dioxide, which is required for a performance of the extraction and/or purification process. By a "carbon dioxide separation device" is in particular, in this context, a device to be understood which is configured to selectively separate carbon dioxide from the ambient gas atmosphere. The device is preferably configured to selectively separate carbon dioxide out of a fluid stream of ambient air. In this respect, different methods for a separation of carbon dioxide out of the ambient air are conceivable, which are deemed expedient by someone skilled in the art. A separation may, for example, be effected by means of an absorber, in particular by means of an absorber bed. Preferably, herein a portion of the ambient air is conveyed to the absorber, in particular an absorber bed. Subsequently, the ambient air leaving the absorber may in particular be released to the environment. The absorber is in particular configured for binding the carbon dioxide, wherein the carbon dioxide is removable from the absorber, in particular the absorber bed, preferably via a purging process, in particular a regeneration process. There are several direct carbon dioxide separation technologies suitable for use according to the present invention. An absorber with a solid sorbent, like Astrine™ of Airbus Defence and Space, Taufkirchen, Germany, is used successfully in advanced closed loop life support systems for space vehicles and submarines. Another example is the known usage of aqueous hydroxide sorbent used to produce carbon-free gasoline.

Furthermore, in this context, a "work chamber" is in particular to be understood as a reaction and/or purification chamber. Preferably the work chamber provides a separate space, which is in particular closed-off in at least one operation state and is configured for a performance of an extraction and/or purification process. Preferentially, the work chamber is in particular configured for a direct accommodation of the materials or objects (e.g. garments) that are to be subjected to the extraction and/or purification process. By a "space closed-off in at least one operation state" is in particular, in this context, a space to be understood which is in at least one operation state, preferably in an operation state with closed access openings, at least substantially separated from an environment in regard to a free air flow and/or fluid exchange.

Different extraction and/or purification processes are conceivable which are deemed expedient by someone skilled in the art. Generally, an extraction or purification process within the meaning of the present invention is any process where one component (the extractant) is separated from another component using carbon dioxide as a solvent in a supercritical or near-supercritical state. The extraction and/or purification system may be configured, for example, for a performance of purification processes, e.g. of garments, fabrics, dishes, mechanical and delicate structural components, or the like. The extraction and/or purification system may moreover be configured, for example, for a performance of disinfection processes, e.g. of surgical material, laboratory equipment or the like. The extraction and/or purification system may also be configured, for example, for the performance of a waste treatment processes. Furthermore, a combination of different processes would be conceivable for an implementation of the extraction and/or purification system as a multi-product platform. "Configured" is in particular to mean specifically programmed, designed and/or equipped. By an object being configured for a certain function is in particular to be understood that the object fulfills and/or implements said certain function in at least one application state and/or operation state.

By an implementation of the extraction and/or purification system according to the invention it is in particular possible to make available an advantageously self-sufficient system. In particular, an extraction and/or purification system may be made available which is capable of providing carbon dioxide for an extraction and/or purification process in a reliable, continuous manner. It is in particular possible to continuously supply carbon dioxide for an extraction and/or purification process. This in particular allows dispensing with a carbon dioxide storage tank like a pressurized gas bottle. Preferentially, an extraction and/or purification process is achievable just by an external feed-in of electrical energy. Due to a production of carbon dioxide directly within the system, the system is easily convertible into a completely autonomous system as, in principle, only electricity is needed. In addition, a carbon-dioxide re-supply interface is completely dispensable, resulting in an increased safety of the whole system. It is achievable that all over the system carbon dioxide emissions are almost zero.

It is further proposed that the at least one carbon dioxide separation device is configured to separate carbon dioxide from a fluid stream, in particular from the ambient air. The carbon dioxide separation device is preferentially configured to selectively convey off a portion of the ambient air in a separate fluid stream and to extract carbon dioxide from the fluid stream, like in particular by means of an absorber, preferably an absorber bed. After having passed the absorber the fluid stream, now at reduced carbon dioxide level, can be preferentially released to the environment. The absorber, in particular the absorber bed, is in particular configured for binding the carbon dioxide, wherein, after an absorption by the absorber, the carbon dioxide is once again removable from the absorber, preferably by a regeneration process of the absorber. This in particular allows achieving a continuous supply of carbon dioxide. In particular a selective extraction of carbon dioxide from the ambient air is achievable.

Moreover, it is proposed that the extraction and/or purification system comprises a transfer unit, which is configured for transferring the carbon dioxide of the carbon dioxide separation device into a supercritical or at least near-supercritical state. The transfer unit is preferentially arranged between the carbon dioxide separation device and the work chamber. Preferably the transfer unit is configured for transferring the carbon dioxide of the carbon dioxide separation device for the work chamber, in particular for a performance of an extraction and/or purification process, into a supercritical or at least near-supercritical state. A "supercritical fluid" is in particular any substance at a temperature and pressure above its critical point. In such a supercritical state, the fluid exhibits properties between gas and liquid state properties. In particular, supercritical liquids possess liquid-like density, gas-like viscosity and surface tension, and diffusivities in a range intermediate between those of a liquid and a gas. Such substances diffuse through solids like a gas, and dissolve materials like a liquid. Generally, supercritical fluids are suitable as substitutes for organic solvents, they can be used for extraction of substances, sterilization, and most importantly for cleaning. Carbon dioxide in its supercritical or at least near-supercritical state is, in particular in a fluid state, above its critical temperature and above its critical pressure or near its critical temperature and above its critical pressure or near its critical temperature and near its critical pressure. "Near" is in particular to mean, in this context, that a value of a temperature or of a pressure is at least 70 %, preferably at least 80 %, preferentially at least 90 % and particularly preferably at least 95 % of a critical value. The characteristics of carbon dioxide in a supercritical state are in particular between the characteristics of a gas and a liquid, supercritical carbon dioxide having in particular a density like a liquid but a viscosity like a gas. Supercritical carbon dioxide is generated in particular at a temperature of more than 31.1 °C and at a pressure of more than 7.375 MPa (73.75 bar). The critical molar volume of supercritical carbon dioxide is in particular 94 cm³ mol⁻¹. The transfer unit is in particular configured to transfer carbon dioxide of the carbon dioxide separation device into a defined state. The transfer unit is in particular configured to transfer carbon dioxide of the carbon dioxide separation device into a supercritical state. The transfer unit preferentially comprises dedicated means for the manipulation of pressure and temperature of the carbon dioxide, preferably at least one pump and at least one heating unit, which are in at least one operation state configured to bring the carbon dioxide into a supercritical or at least near-supercritical state. It is in this way in particular possible to advantageously provide supercritical or at least near-supercritical carbon dioxide for an extraction and/or purification process. It is in particular possible to directly generate supercritical or at least near-supercritical carbon dioxide for an extraction and/or purification process. Furthermore, carbon dioxide has in its supercritical state approximately zero viscosity and surface tension. It is thus capable of easily entering into cavities or textiles without any additional chemicals. In classical water-cleaning technology a similar cleaning effect can only be achieved by adding chemical substances to water.

It is furthermore proposed that the at least one carbon dioxide separation device comprises a carbon dioxide absorbent material for CO₂ binding. Preferentially the carbon dioxide separation device is configured to convey the ambient air at least partly through the CO₂ absorbent material for the purpose of binding the carbon dioxide present in the ambient air in the CO₂ absorbent material. The carbon dioxide separation device is preferably configured to regenerate the CO₂ absorbent material following a CO₂ binding, for the purpose of removing the carbon dioxide from the CO₂ absorbent material. It is preferentially proposed that the CO₂ absorbent material is composed of a macro-porous ion-exchange resin, in particular according to the one disclosed in DE19830470C1. Preferably the CO₂ absorbent material is implemented of a macro-porous ion-exchange resin with vinylbenzene polymers, which are polymerized with divinylbenzene and comprise primary benzylamines as functional groups. Resins comprising primary benzylamine groups have a particularly high binding capability for gaseous CO₂. The intake capacity of the resin for CO₂ is under normal atmospheric conditions, in particular in case of saturation, at least 60 g CO₂ per kg resin, referring to the dry mass of the resin. Preferred parameters of an ion-exchange resin to be used are a polymerization grade of 2 % to 10 %, a concentration of the functional groups between 2 and 3 mol/l, a porosity between 20 % and 30 %, and an average pore diameter between 200 and 300 angstrom. In an advantageous implementation of the carbon dioxide separation device the ion-exchange resin is exposed to the CO₂-containing ambient air by way of the air being conveyed through an ion-exchange resin in bulk form by means of an air pump, preferably a blower. When flowing through the resin the CO₂ molecules are bound to the functional primary benzylamine groups on the outer and inner surfaces of the macro-porous resin beads and the through-flowing medium is depleted accordingly. The regeneration of the resin may be effected in a plurality of ways; a selection of the regeneration type depends on the application case at hand and other technical and logistic requirements. A regeneration of the ion-exchange resin may, for example, be effected by usage of slightly overheated water vapor under atmospheric conditions and the resulting expulsion of the CO₂. Alternatively, the regeneration of the ion-exchange resin may be effected by applying a negative pressure. In this way in particular a separation of carbon dioxide off the ambient air is reliably achievable. This in particular allows a reliable supply of carbon dioxide. In particular, a selective extraction of carbon dioxide from the ambient air is achievable.

It is also proposed that the at least one work chamber is configured for a usage of the carbon dioxide in a supercritical or at least near-supercritical state. Preferentially the work chamber is configured, for an extraction and/or purification process, to accommodate carbon dioxide in a supercritical or at least near-supercritical state as a solvent. This in particular allows advantageously using supercritical or at least near-supercritical carbon dioxide for an extraction and/or purification process of the work chamber.

Further, it is proposed that the extraction and/or purification system comprises at least one storage unit, which is configured for an intermediate storage of the carbon dioxide. Preferably the storage unit in particular implements a temporary storage, which is configured, before and/or during an extraction and/or purification process, for an intermediate storage of generated carbon dioxide. The storage unit in particular serves as a buffer storage for the extraction and/or purification process. It would moreover also be conceivable that the storage unit is configured for a storage of carbon dioxide of a previous extraction and/or purification process. Preferentially, the carbon dioxide for the extraction and/or purification process is separated via the carbon dioxide separation device before and/or during the extraction and/or purification process, intermediately stored via the storage unit and then - according to demand - processed by the transfer unit. Preferably, the storage unit is in particular implemented as a storage tank, in particular a liquid and/or gas tank. Particularly preferably, the storage unit is implemented as a liquid tank, which is configured to accommodate the carbon dioxide in a liquid aggregation state. The transfer unit is fluidically arranged in particular downstream of the storage unit. In this way in particular an intermediate storage of carbon dioxide is achievable. It is in particular possible to achieve a buffering of carbon dioxide for an extraction and/or purification process during the separation of the carbon dioxide. By means of the storage unit it is in particular possible to compensate for a discontinuous supply of carbon dioxide by the carbon dioxide separation device.

It is further proposed that the extraction and/or purification system comprises a housing at least partly accommodating each of the at least one carbon dioxide separation device and the at least one work chamber. In other words: The extraction and/or purification system can be implemented as a fully integrated and self-contained device. The extraction and/or purification system is preferentially embodied by a contiguous apparatus, which is arranged in the shared housing. Preferably the carbon dioxide separation device is immobile with respect to the work chamber. The housing is in particular configured to at least substantially enclose the at least one carbon dioxide separation device and the at least one work chamber. Preferably the work chamber in particular comprises an outwards-oriented access opening, via which the work chamber may be made accessible, in particular by an access door. Preferentially, the carbon dioxide separation device comprises at least one outwards-oriented suction opening and/or at least one outwards-oriented discharge opening for a suctioning-in and/or discharge of ambient air. The housing may herein be implemented in particular as a one-part housing and as well as a multi-part, in particular multi-shell, housing. This in particular allows providing a contiguous and compact apparatus. It is thus in particular possible to advantageously achieve mechanical protection of the at least one carbon dioxide separation device and the at least one work chamber.

The carbon dioxide stream that exits the working chamber will be contaminated by the extractant (i.e. the component that was extracted during the purification or extraction process). Accordingly, it is proposed that the extraction and/or purification system comprises at least one carbon dioxide recovery unit, which is configured for an at least partial separation of carbon dioxide from the contaminated carbon dioxide stream exiting the work chamber. Preferably the carbon dioxide recovery unit is configured for a separation of pure carbon dioxide out of a contaminated carbon dioxide of the work chamber. It is in particular possible that the separated carbon dioxide is discharged and/or particularly preferably that it is re-conveyed to a storage unit, in particular the storage unit described above, for re-use. As regards the separated contaminations (i.e. the extractants), they may be collected and advantageously used for suitable other purposes.

By a "carbon dioxide recovery unit" is in particular, in this context, a separation unit to be understood which is configured for a selective extraction of pure carbon dioxide from a contaminated carbon dioxide stream. Preferably, the device is configured for a selective separation of carbon dioxide from a fluid stream exiting the work chamber. Different methods, deemed expedient by someone skilled in the art, for a separation of carbon dioxide from a contaminated carbon dioxide stream can be used. A separation may, for example, be effected by an absorber and/or by separating off contaminations. In another variant, a separation may be effected, like in the carbon dioxide separation device, by an absorber, in particular by an ion-exchange resin. The absorber is herein in particular configured for binding the carbon dioxide, wherein carbon dioxide is preferably removable from the absorber via a regeneration process. This in particular allows achieving a selective separation of carbon dioxide from a contaminated carbon dioxide stream exiting the work chamber. In this way in particular a re-use of the carbon dioxide is achievable. This further allows in particular achieving a selective disposal of contaminations. In a preferential implementation, the separation of the extractants from the carbon dioxide is done by reducing pressure. The carbon dioxide will immediately turn into gas state and thereby the gaseous carbon dioxide and the solid or liquid extractants are separated.

The invention is furthermore based on a method for an operation of the extraction and/or purification system. It is proposed that, by means of the at least one carbon dioxide separation device, carbon dioxide is separated from the ambient air and is introduced into the at least one work chamber for the purpose of performing an extraction and/or purification process with carbon dioxide as a solvent. In this way in particular advantageously self-sufficient operation of the extraction and/or purification system is achievable. In particular a long-term operation of the extraction and/or purification system is achievable, wherein in particular carbon dioxide is supplied for an extraction and/or purification process in a reliable, long-term manner. It is in particular possible to supply carbon dioxide for an extraction and/or purification process continuously. In particular this allows dispensing with a carbon dioxide storage tank like a pressurized gas bottle. Preferably an extraction and/or purification process is achievable merely by external supply of electric power.

It is moreover proposed that the carbon dioxide is in a supercritical or at least near-supercritical state during the extraction and/or purification process. Preferably, the carbon dioxide is brought into a supercritical or at least near-supercritical state for the extraction and/or purification process by means of the transfer unit. Preferably the supercritical or at least near-supercritical carbon dioxide constitutes a solvent during the extraction and/or purification process. This in particular allows advantageous usage of supercritical or at least near-supercritical carbon dioxide for an extraction and/or purification process. In this way in particular an advantageous extraction and/or purification result is achievable.

It is also proposed that, by means of the transfer unit, the carbon dioxide is transferred into a supercritical or at least near-supercritical state before entering the work chamber. Preferentially, for the work chamber, in particular for the performance of an extraction and/or purification process, the carbon dioxide of the carbon dioxide separation device is transferred into a supercritical or at least near-supercritical state. Preferably the carbon dioxide is brought into a supercritical or at least near-supercritical state by dedicated means for the manipulation of pressure and temperature, preferably at least one pump and at least one heating unit forming part of the transfer unit. In this way in particular advantageously supercritical or at least near-supercritical carbon dioxide may be made available for an extraction and/or purification process. It is in particular possible to directly generate supercritical or at least near-supercritical carbon dioxide for an extraction and/or purification process.

Furthermore, it is proposed that the carbon dioxide supplied by the at least one carbon dioxide separation device is fed to an intermediate storage unit of the extraction and/or purification system via the work chamber. Preferably, prior to an extraction and/or purification process, the carbon dioxide supplied via the at least one carbon dioxide separation device is fed to a storage unit of the extraction and/or purification system for intermediate storage. The storage unit in particular serves as a buffer storage for the extraction and/or purification process. It would moreover also be conceivable that carbon dioxide recovered from a previous extraction and/or purification process is stored by means of the storage unit. Preferentially, the carbon dioxide for the extraction and/or purification process is separated via the carbon dioxide separation device before and/or during the extraction and/or purification process, intermediately stored via the storage unit and then - according to demand - processed by the transfer unit. In this way in particular an intermediate storage of carbon dioxide is achievable. In particular a buffering of carbon dioxide for the extraction and/or purification process during the separation of the carbon dioxide is achievable.

It is further proposed that the carbon dioxide is separated from the ambient air by exposing ambient air to the CO₂ absorbent material. Preferably the ambient air is conveyed to a CO₂ absorbent material for a CO₂ binding. The CO₂ absorbent material is then in particular regenerated for the purpose of removing the carbon dioxide from the CO₂ absorbent material. The CO₂ absorbent material is preferably implemented of a macro-porous ion-exchange resin. Preferentially the CO₂ absorbent material is implemented of a macro-porous ion-exchange resin with vinylbenzene polymers, which are polymerized with divinylbenzene and contain primary benzylamines as functional groups. In this way in particular a separation of carbon dioxide from the ambient air is reliably achievable. It is in this way in particular possible to achieve a reliable carbon dioxide supply. In particular a selective extraction of carbon dioxide from the ambient air is achievable.

The extraction and/or purification system according to the invention and the method are herein not to be restricted to the application and implementation described above. In particular, for the purpose of fulfilling a functionality that is described here, the extraction and/or purification system according to the invention and the method may comprise a number of respective elements, structural components and method steps that differs from a number given here. Moreover, as regards value ranges given in the present disclosure, values within the limits named are to be considered as disclosed and as applicable according to requirements.

### Drawings

Further advantages will become apparent from the following description of the drawings. In the drawings an exemplary embodiment of the invention is depicted. The drawings, the description and the claims contain a plurality of features in combination. Someone skilled in the art will purposefully also consider the features separately and will find further expedient combinations.

It is shown in:
- Fig. 1: a purification system according to the invention, with a carbon dioxide separation device and with a work chamber, in a schematic representation, and
- Fig. 2: a schematic flow chart of a method for an operation of the purification system according to the invention.

### Description of the exemplary embodiment

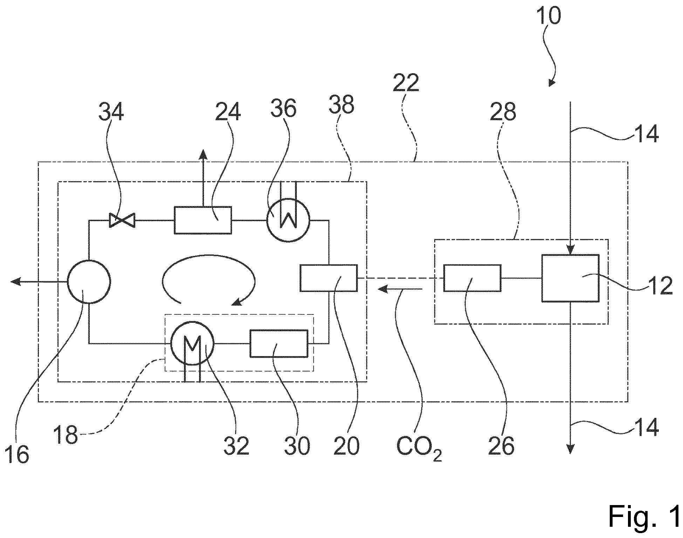

Figure 1 shows an extraction and/or purification system. The extraction and/or purification system is exemplarily implemented as a purification system 10. The purification system 10 is implemented as an autonomous purification system 10. In principle, however, it would also be conceivable that the extraction and/or purification system is designed as an extraction system. The purification system 10 may be configured, for example, for a performance of a purification processes, e.g. of laundry, dishes, mechanical and delicate structural components, or the like using carbon dioxide in a supercritical or near supercritical state. The purification system 10 may further be configured, for example, for a performance of disinfection processes, e.g. of surgical material, laboratory equipment, or the like. Moreover, the purification system 10 may be configured, for example, for a performance of an extraction processes or waste treatment processes using carbon dioxide in a supercritical or near supercritical state. The purification system 10 comprises a control and regulation unit (not shown), which is configured to control a purification process of the purification system 10.

The purification system 10 comprises a carbon dioxide separation device 12. The carbon dioxide separation device 12 is configured for a supply of separated carbon dioxide CO₂ from the ambient air 14. The carbon dioxide separation device 12 is configured for a separation of carbon dioxide CO₂ from a fluid stream 14 of the ambient air. The carbon dioxide separation device 12 is configured for an extraction of a portion of the ambient air 14 in a separate fluid stream, and to extract carbon dioxide CO₂ from the fluid stream by means of an absorber. The carbon dioxide separation device 12 comprises a CO₂ absorbent material for CO₂ binding. The CO₂ absorbent material is implemented as a macro-porous ion-exchange resin. The CO₂ absorbent material is implemented as a macro-porous ion-exchange resin with vinylbenzene polymers, which are polymerized with divinylbenzene and contain primary benzylamines as functional groups.

The carbon dioxide separation device 12 is configured to convey the ambient air 14 through the CO₂ absorbent material for the purpose of binding carbon dioxide CO₂ that is present in the ambient air 14 in the CO₂ absorbent material. The ion-exchange resin is herein in particular exposed to the CO₂-containing ambient air 14 by way of the air being conveyed through an ion-exchange resin in bulk form by means of an air pump, preferably a blower. When flowing through the resin, the CO₂ molecules are bound to the functional primary benzylamine groups on the outer and the inner surfaces of the macro-porous resin beads. The carbon dioxide separation device 12 is configured to regenerate the CO₂ absorbent material after a CO₂ binding, for the purpose of re-moving the carbon dioxide CO₂ from of the CO₂ absorbent material. A regeneration of the ion-exchange resin is effected, for example, by an application of slightly overheated water vapor under atmospheric conditions and by the expulsion of the carbon dioxide CO₂ resulting therefrom.

The purification system 10 further comprises a conditioning unit 26. The conditioning unit 26 is connected to the carbon dioxide separation device 12 via a line. Carbon dioxide CO₂ separated off by means of the carbon dioxide separation device 12 is conveyed to the conditioning unit 26. The conditioning unit 26 is configured for a conditioning of the carbon dioxide CO₂ in terms of humidity, pressure and other parameters according to operational requirements of the purification process. The conditioning unit 26 and the carbon dioxide separation device 12 realize a CO₂ generating subsystem 28 of the purification system 10.

Following a conditioning the carbon dioxide CO₂ is fed to a storage unit 20. The purification system 10 comprises the storage unit 20. The storage unit 20 is connected with the conditioning unit 26 via a line. The storage unit 20 is configured for an intermediate storage of the carbon dioxide CO₂. The storage unit 20 implements a temporary storage which is configured, before and during a purification process, for an intermediate storage of carbon dioxide CO₂ generated by means of the carbon dioxide separation device 12. The storage unit 20 serves as a buffer storage for a purification process of the purification system 10. The storage unit 20 is furthermore configured for the storage of carbon dioxide CO₂ recovered from a previous purification process of the CO₂ processing system 38. The storage unit 20 is embodied by a storage tank. The storage unit 20 is embodied by a tank that is configured to accommodate the carbon dioxide CO₂ in a liquid aggregation state.

The purification system 10 furthermore comprises a transfer unit 18. The transfer unit 18 is configured to transfer the carbon dioxide CO₂ of the carbon dioxide separation device 12 into a supercritical state. The transfer unit 18 is for this purpose connected to the storage unit 20 by a line. Via a valve (not shown) which is controlled by a control and regulation unit of the purification system 10, the transfer unit 18 is supplied with carbon dioxide CO₂ according to demand. The transfer unit 18 is configured to transfer the carbon dioxide CO₂ of the carbon dioxide separation device 12 into a supercritical state for a work chamber 16, for a performance of a purification process. Carbon dioxide CO₂ in a supercritical state is, in a fluid state, above its critical temperature and above its critical pressure. The transfer unit 18 comprises a pump 30. The pump 30 is configured to increase a pressure of the carbon dioxide CO₂ above a critical value. The pump 30 is configured to compress the carbon dioxide CO₂ to a pressure of more than 7.375 MPa (73.75 bar). The transfer unit 18 further comprises a heating unit 32. The heating unit 32 is configured to raise a temperature of the carbon dioxide CO₂, in particular the compressed carbon dioxide CO₂, above a critical value. The heating unit 32 is configured for heating the carbon dioxide CO₂ to a temperature of more than 31.1 °C. The heating unit 32 is fluidically arranged downstream of the pump 30. Principally however an alternative arrangement of the heating unit 32 and the pump 30 would also be conceivable.

The purification system 10 further comprises the work chamber 16. The work chamber 16 is configured for the performance of a purification process with carbon dioxide CO₂ as a solvent. Principally, it would however be also conceivable that the work chamber 16 is configured for the performance of an extraction process. The work chamber 16 is coupled with the carbon dioxide separation device 12. An access opening of the work chamber 16 is connected to the transfer unit 18 via a line. In operation, the work chamber 16 is supplied with carbon dioxide CO₂ of the carbon dioxide separation device 12 via the transfer unit 18, the storage unit 20 and the conditioning unit 26. The work chamber 16 is configured for a usage of the carbon dioxide CO₂ in a supercritical state. The work chamber 16 is configured to accommodate carbon dioxide CO₂ as a solvent, in a supercritical state, for the purification process. In practice, the above-described advantageous behavior of carbon dioxide can already be achieved when the carbon dioxide is only near its supercritical state (as seen in the two-dimensional p-T diagram of carbon dioxide). Hence, the advantageous extraction and purification effect of the system according to the invention can be achieved by using such near-supercritical carbon dioxide. The work chamber 16 is capable of being charged, manually and/or automatically, via an access opening that is not shown, before a purification process and before a feed-in of carbon dioxide CO₂, with materials or objects (e.g. garments) that are to be purified. The work chamber 16 is then configured to take in, before a purification process, carbon dioxide CO₂ as a solvent, in a supercritical state. During the purification process the work chamber 16 is closed. Advantageously, additional means for agitation of the carbon dioxide and the materials or objects in the work chamber 16 can be provided (not shown).

After a purification process contaminated carbon dioxide is discharged on an exit side of the work chamber 16. The exit side of the work chamber 16 is connected to a reduction valve 34. The reduction valve 34 is configured for a reduction of a pressure of the contaminated carbon dioxide, in particular below a critical value.

The purification system 10 further comprises a carbon dioxide recovery unit 24. The carbon dioxide recovery unit 24 is connected to the reduction valve 34 via a line. The carbon dioxide recovery unit 24 is configured for a separation of carbon dioxide CO₂ from the stream of contaminated carbon dioxide exiting the work chamber 16. The carbon dioxide recovery unit 24 is configured for a separation of pure carbon dioxide CO₂ out of the contaminated carbon dioxide of the work chamber 16. The contaminations which are herein removed are disposed of and/or are discharged in vapored form. The separated pure carbon dioxide CO₂ is conveyed to the storage unit 20 for re-use. The separated pure carbon dioxide CO₂ is conveyed, in particular via a cooling unit 36, to the storage unit 20 via a line. The cooling unit 36 in particular serves for a conditioning of the carbon dioxide CO₂ to be supplied to the storage unit 20.

The storage unit 20, the transfer unit 18, the work chamber 16, the carbon dioxide recovery unit 24 and the cooling unit 36 together constitute a CO₂ processing subsystem operating in a closed loop. As in practice losses of carbon dioxide are unavoidable, the present invention provides an advantageous solution of how to supply carbon dioxide in order to compensate for the losses occurred during normal operation of the system.

Further, the purification system 10 comprises a housing 22. The housing 22 accommodates at least the carbon dioxide separation device 12 and the work chamber 16. The housing 22 accommodates the CO₂ generating subsystem 28 and the CO₂ processing subsystem 38. The purification system 10 is realized by a contiguous apparatus, which is arranged in the shared housing 22. The CO₂ generating subsystem 28 is immobile relative to the CO₂ processing subsystem 38.

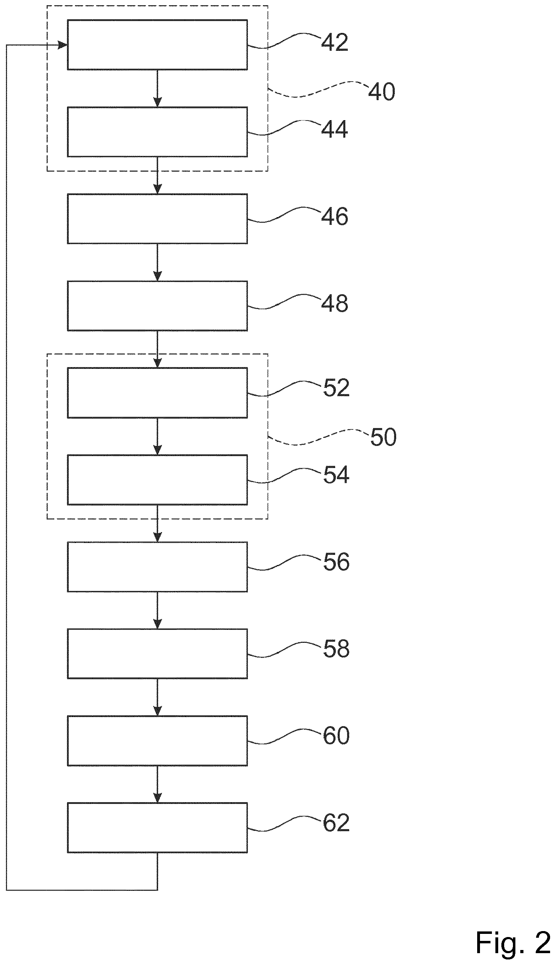

Figure 2 shows a schematic flow chart of a method for an operation of the purification system 10. The method describes a purification process of materials or objects (e.g. garments) that are to be purified, which is capable of being performed according to demand. In one particular example, the purification process is started by a human operator, it would however also be conceivable that the purification process is carried out in a completely automated manner. Preferentially, at the start of the method the work chamber 16 is filled with the materials or objects that are to be purified.

During the method, in a first separation step 40 carbon dioxide CO₂ is separated from the ambient air 14 by means of the at least one carbon dioxide separation device 12. The carbon dioxide CO₂ is separated from the ambient air 14 by way of the ambient air 14 being exposed to the CO₂ absorbent material. For this purpose, in a separation step 42 the ion-exchange resin is exposed to the ambient air 14 by way of the air being conveyed through the ion-exchange resin in bulk form by an air pump, preferably a blower. When flowing through the resin bulk, the CO₂ molecules are bound to the functional primary benzylamine groups on the outer and the inner surfaces of the macro-porous resin beads, and the through-flowing medium is depleted of carbon dioxide accordingly. The separated fluid stream of the ambient air 14 may then be released to the environment. After this, and following a CO₂ binding, the CO₂ absorbent material is regenerated in a regeneration step 44, for the purpose of removing the carbon dioxide CO₂ out of the CO₂ absorbent material and to convey it onward. In the regeneration step an expulsion of the carbon dioxide CO₂ is effected. Ultimately, the expulsed carbon dioxide CO₂ is conveyed to the conditioning unit 26.

Then, in a conditioning step 46 a conditioning of the carbon dioxide CO₂ regarding e.g. its level of humidity, etc. is effected in the conditioning unit 26. In a storage step 48 the carbon dioxide CO₂ supplied by the carbon dioxide separation device 12 and conditioned by the conditioning unit 26 is fed to the storage unit 20 of the purification system 10. The storage unit 20 serves as a buffer storage for the purification process.

The carbon dioxide CO₂ is transferred into a supercritical state by means of the transfer unit 18. In a transfer step 50 following the storage step 48, the carbon dioxide CO₂ is transferred into a supercritical state. The carbon dioxide CO₂ of the carbon dioxide separation device 12 is transferred into a supercritical state for the performance of the purification process in the work chamber 16. For this purpose, in a compression step 52 the carbon dioxide CO₂ is compressed to a pressure above the critical value by means of the pump 30. Then, in a heating step 54 the carbon dioxide CO₂ is heated to a temperature above the critical value by means of the heating unit 32. As is obvious to one skilled in the art, the chronological sequence in which the compression step and heating step are performed may be implemented in a different way. For example the heating step may be performed first. In a variation, heating step and compression step may be performed concurrently.

Following this, carbon dioxide CO₂ is fed as a solvent to the work chamber 16 and the purification process is performed in a working step 56. During the purification process the carbon dioxide CO₂ is in a supercritical state or at least a near-supercritical state. After the purification process the carbon dioxide which is contaminated by the component that was extracted in the purification or extraction process (the extractant) is fed to the carbon dioxide recovery unit 24, which, in a recovery step 58, separates the pure carbon dioxide CO₂ from the contaminated carbon dioxide stream exiting the work chamber 16. The extractant which is herein removed may be collected and used for other suitable purposes. The separated pure carbon dioxide CO₂ is, in a second conditioning step 60, conditioned via the cooling unit 36 to bring it into liquid state and is, in a further storage step 62, fed to the storage unit 20 via a line. The separated pure carbon dioxide CO₂ is re-conveyed to the storage unit 20 for re-use.

### Reference numerals

- 10: purification system
- 12: carbon dioxide separation device
- 14: ambient air
- 16: work chamber
- 18: transfer unit
- 20: storage unit
- 22: housing
- 24: recovery unit
- 26: conditioning unit
- 28: CO₂ generating subsystem
- 30: pump
- 32: heating unit
- 34: reduction valve
- 36: cooling unit
- 38: CO₂ processing subsystem
- 40: separation step
- 42: separation step
- 44: regeneration step
- 46: conditioning step
- 48: storage step
- 50: transfer step
- 52: compression step
- 54: tempering step
- 56: working step
- 58: recovery step
- 60: second conditioning step
- 62: storage step

## Claims

1. Extraction and/or purification system, in particular autonomous extraction and/or purification system, with at least one carbon dioxide separation device (12) that is configured to provide separated carbon dioxide (CO₂) from the ambient air (14), and with at least one work chamber (16), which is configured to perform an extraction and/or purification process with carbon dioxide (CO₂) as a solvent, wherein the work chamber (16) is coupled with the carbon dioxide separation device (12).

2. Extraction and/or purification system according to claim 1,
**characterized in that**
the at least one carbon dioxide separation device (12) is configured to separate carbon dioxide (CO₂) from a fluid flow of the ambient air (14).

3. Extraction and/or purification system according to claim 1 or 2,
**characterized by**
a transfer unit (18), which is configured for transferring the carbon dioxide (CO₂) of the carbon dioxide separation device (12) into a supercritical or at least near-supercritical state.

4. Extraction and/or purification system according to one of the proceeding claims,
**characterized in that**
the at least one carbon dioxide separation device (12) comprises a carbon dioxide absorbent material for CO₂ binding.

5. Extraction and/or purification system according to claim 4,
**characterized in that**
the carbon dioxide separation material is a macro-porous ion-exchange resin, preferably according to DE19830470C1.

6. Extraction and/or purification system according to one of the preceding claims,
**characterized in that**
the at least one work chamber (16) is configured for a usage of the carbon dioxide (CO₂) in a supercritical or at least near-supercritical state.

7. Extraction and/or purification system according to one of the preceding claims,
**characterized by**
at least one storage unit (20), which is configured for an intermediate storage of the carbon dioxide (CO₂).

8. Extraction and/or purification system according to one of the preceding claims,
**characterized by**
a housing (22) at least partly accommodating each of the at least one carbon dioxide separation device (12) and the at least one work chamber (16).

9. Extraction and/or purification system according to one of the preceding claims,
**characterized by**
at least one carbon dioxide recovery unit (24), which is configured for an at least partial separation of carbon dioxide (CO₂) from the contaminated carbon dioxide stream exiting the work chamber (16).

10. Method for an operation of the extraction and/or purification system (10) according to one of the preceding claims,
**characterized in that**,
by means of the at least one carbon dioxide separation device (12), carbon dioxide (CO₂) is separated from the ambient air (14) and introduced into the at least one work chamber (16) for the purpose of performing an extraction and/or purification process with carbon dioxide (CO₂) as a solvent.

11. Method according to claim 10,
**characterized in that**
the carbon dioxide (CO₂) is in a supercritical or at least near-supercritical state during the extraction and/or purification process.

12. Method according to claim 11,
**characterized in that**,
by means of the transfer unit (18), the separated carbon dioxide (CO₂) is transferred into a supercritical or at least near-supercritical state before entering the work chamber (16).

13. Method according to claim 10,
**characterized in that**,
the carbon dioxide (CO₂) supplied by the carbon dioxide separation device (12) is fed to an intermediate storage unit (20) of the extraction and/or purification system (10).

14. Method according to claim 10,
**characterized in that**
the carbon dioxide (CO₂) is separated from the ambient air (14) by exposing ambient air (14) to the carbon dioxide absorbent material.
